# EUROPÄISCHE PATENTSCHRIFT

(11) **EP 1 180 125 B1**
(45) Veröffentlichungstag und Bekanntmachung des Hinweises auf die Patenterteilung: **12.01.2005**
(21) Anmeldenummer: 00938676.4
(22) Anmeldetag: 24.05.2000
(51) Int. Cl.: C08L 75/04, C09D 175/04

(54) **WÄSSRIGE BINDEMITTELDISPERSIONEN, ÜBERZUGSMITTEL UND DEREN VERWENDUNG**
AQUEOUS BINDING AGENT DISPERSIONS, COATING AGENTS AND THE USE THEREOF
DISPERSIONS DE LIANTS, AGENTS DE REVETEMENT AQUEUX ET LEUR UTILISATION

(30) Priorität: 27.05.1999 DE 19924415
(43) Veröffentlichungstag der Anmeldung: 20.02.2002
(73) Patentinhaber: E.I. DU PONT DE NEMOURS AND COMPANY, Wilmington, Delaware 19898 (US)
(72) Erfinder: BOSCH, Werner, D-42339 Wuppertal (DE); GÖBEL, Armin, D-58300 Wetter (DE); SCHMIDT, Holger, D-42115 Wuppertal (DE); VOGT-BIRNBRICH, Bettina, D-42719 Solingen (DE)
(74) Vertreter: Gille Hrabal Struck Neidlein Prop Roos
(86) Internationale Anmeldenummer: PCT/EP2000/004696
(87) Internationale Veröffentlichungsnummer: WO 2000/073388

(56) Entgegenhaltungen:
- EP-A- 0 490 149
- US-A- 5 384 163
- US-A- 5 520 963

## Beschreibung

Die Erfindung betrifft die verwendung wäßriger Bindemitteldispersionen für wäßrige Überzugsmittel auf Basis wasserunlösliche Celluloseester enthaltender Polyurethane, die (meth)acryliert sein können. Sie betrifft auch Verfahren zu deren Herstellung und Verfahren zur Mehrschichtlackierung unter Verwendung der Überzugsmittel, insbesondere als Wasserbasislack in Verfahren zur Herstellung dekorativer Mehrschichtlackierungen vom Typ Wasserbasislack/Klarlack.

Für die Herstellung dekorativer Mehrschichtlackierungen vom Typ Basislack/Klarlack geeignete Basislacke auf Basis organischer Lösemittel, die Celluloseester wie Celluloseacetobutyrat enthalten, sind bekannt. Celluloseester verleihen Basislacken auf Basis organischer Lösemittel besondere rheologische Eigenschaften, die im Falle von Effektbasislacken zu einer günstigen Effektausprägung innerhalb der fertigen Zweischichteffektlackierung führen.

Wasserunlösliche Celluloseester enthaltende Wasserbasislacke sind aus EP-A-0 069 936 und aus WO 97/49739 bekannt. EP-A-0 069 936 beschreibt als Bindemittel in Wasserbasislacken geeignete Dispersionen von Celluloseestem in Wasser, die hergestellt werden durch Copolymerisation eines Gemisches aus einem wasserlöslichen Harz aus der Gruppe Polyesterharze, Acrylharze und Alkydharze und alpha,betaethylenisch ungesättigter Monomerer in Gegenwart der gelösten Celluloseester, wobei der Celluloseestergehalt, bezogen auf den Gesamtfeststoffgehalt der Dispersion zwischen 5 und 40 % beträgt. WO 97/49739 beschreibt als Bindemittel in Wasserbasislacken geeignete Dispersionen, die mindestens 5 Gew.-%, bevorzugt 10 bis 30 Gew.-% Celluloseester, bezogen auf den Harzfestkörper der Dispersion enthalten, wobei es sich um Dispersionen auf der Basis von Vinylpolymeren handelt, die hergestellt werden durch Copolymerisation zuvor hergestellter wäßriger Emulsionen von in einem Gemisch aus Vinylmonomeren gelöstem Celluloseester. Die Vinylmonomeren umfassen dabei polyungesättigte Vinylmonomere.

Die wasserunlösliche Celluloseester enthaltenden Wasserbasislacke des Standes der Technik weisen niedrige Verarbeitungsfestkörper auf im Vergleich zu entsprechenden keine wasserunlösliche Celluloseester enthaltenden Wasserbasislacken. Außerdem hat es sich gezeigt, daß die in den bekannten Basislackschichten enthaltenen Celluloseester die Witterungsbeständigkeit von Basislack/Klarlack-Zweischichtlackierungen schwächen.

Aufgabe der Erfindung ist die Bereitstellung wäßriger Überzugsmittel mit einem rheologisch wirksamen Gehalt an Celluloseester, die die vorstehenden Nachteile nicht aufweisen und die insbesondere für Mehrschichtlackierungen geeignet sind, insbesondere für die Erstellung von farb- und/oder effektgebenden Basislackschichten.

Die Lösung der Aufgabe gelingt, wenn man die einen Gegenstand der Erfindung bildenden wäßrigen Dispersionen von Polyurethanharzen, welche (meth)acryliert sein können, als Bindemittel in wäßrigen Überzugsmitteln verwendet, wobei die gegebenenfalls (meth)acrylierten Polyurethandispersionen 0,5 bis 5 Gew.-%, bevorzugt bis unter 5 Gew.-% wasserunlöslicher Celluloseester, bezogen auf den Dispersionsfestkörper enthalten. Es war keineswegs zu erwarten, daß die erfindungsgemäßen Bindemitteldispersionen in wäßrigen Überzugsmitteln mit ihren niedrigen Gehalten von 0,5 bis 5 Gew.-% wasserunlöslicher Celluloseester in den gegebenenfalls (meth)acrylierten Polyurethandispersionsteilchen die aufgabengemäßen rheologischen Eigenschaften aufweisen.

Einen weiteren Gegenstand der Erfindung bilden wäßrige Überzugsmittel, die wäßrige Bindemitteldispersionen auf Basis von Polyurethanharzen, die (meth)acryliert sein können, enthalten, und die dadurch gekennzeichnet sind, daß die gegebenenfalls (meth)acrylierten Polyurethandispersionsteilchen 0,5 bis 5 Gew.-%, bezogen auf ihren Festkörpergehalt, wasserunlöslicher Celluloseester enthalten.

Die gegebenenfalls (meth)acrylierten Polyurethandispersionsteilchen bestehen zu 0,5 bis 5 Gew.-%, bevorzugt bis unter 5 Gew.-%, aus wasserunlöslichen Celluloseestern und zu 95 (bevorzugt über 95) bis 99,5 Gew.-% aus gegebenenfalls (meth)acryliertem Polyurethanharz.

Die erfindungsgemäßen wäßrigen Überzugsmittel enthalten eine oder mehrere wäßrige Bindemitteldispersionen auf Basis von Polyurethanharzen A) und/oder (meth)acrylierten Polyurethanharzen B) mit einem Gehalt von 0,5 bis 5 Gew.-%, bevorzugt bis unter 5 Gew.-%, wasserunlöslicher Celluloseester, bezogen auf den Dispersionsfestkörper.

Bei den wäßrigen Bindemitteldispersionen handelt es sich entweder um Dispersionen von Polyurethanharzen A), die jeweils vor der Zugabe wesentlicher Wassermengen zwecks Überführung in die disperse Phase mit einer entsprechenden Menge an wasserunlöslichem Celluloseester vermischt und danach durch Zugabe von Wasser in die disperse Phase überführt werden oder es handelt sich um Dispersionen (meth)acrylierter Polyurethanharze B), die vor oder nach ihrer (Meth)acrylierung, in jedem Fall jedoch noch vor der Zugabe wesentlicher Wassermengen zwecks Überführung in die disperse Phase mit einer entsprechenden Menge an wasserunlöslichem Celluloseester vermischt und danach durch Zugabe von Wasser in die disperse Phase überführt werden. Die Dispersionen (meth)acrylierter Polyurethanharze B) können dabei hergestellt werden, indem die Polyurethanharze in nicht-wäßriger Phase (meth)acryliert, danach mit einer entsprechenden Menge an wasserunlöslichem Celluloseester vermischt und danach durch Zugabe von Wasser in die disperse Phase überführt werden oder indem sie in nicht-wäßriger Phase mit einer entsprechenden Menge an wasserunlöslichem Celluloseester vermischt, danach (meth)acryliert und danach durch Zugabe von Wasser in die disperse Phase überführt werden. Bevorzugt jedoch werden die Polyurethanharze in nicht-wäßriger Phase mit einer entsprechenden Menge an wasserunlöslichem Celluloseester vermischt, danach durch Zugabe wesentlicher Wassermengen in die disperse Phase überführt und danach in der wäßrigen Dispersion (meth)acryliert. Der Ausdruck "(Meth)acrylierung" bedeutet, daß zur Herstellung der (meth)acrylierten Polyurethanharze B) eine radikalische Polymerisation (meth)acrylisch ungesättigter Monomerer in Gegenwart von Polyurethanharzen durchgeführt wird.

Falls die wasserunlöslichen Celluloseester nur unzureichend mit den noch wasserfrei vorliegenden Polyurethanharzen A) bzw. mit den noch wasserfrei vorliegenden zu (meth)acrylierenden Polyurethanharzen vermischbar oder nur unzureichend darin löslich sind, ist es zweckmäßig, die wasserunlöslichen Celluloseester in Form einer organischen Lösung mit den noch wasserfrei vorliegenden Polyurethanharzen zu vermischen. Bei den wasserunlöslichen Celluloseestern handelt es sich beispielsweise um Celluloseacetopropionat oder Celluloseacetobutyrat, welche beide im Handel, beispielsweise von Eastman, in verschiedenen wasserunlöslichen Varianten mit unterschiedlichen Hydroxyl-, Acetyl-, und Propionyl- bzw. Butyrylgehalten angeboten werden. Bevorzugt ist Celluloseacetobutyrat, insbesondere mit hohen Butyrylgehalten zwischen 35 und 55 Gew.-%. Als organische Lösungen der wasserunlöslichen Celluloseester können beispielsweise solche mit einem Gehalt von 20 bis 60 Gew.-% Celluloseester in polaren organischen, bevorzugt wassermischbaren Lösemitteln eingesetzt werden. Beispiele für verwendbare Lösemittel sind Ester, Glykolether, Glykoletherester, Glykolester, Ketone, N-Alkylpyrrolidone. Bevorzugt sind Butylglykol und N-Methylpyrrolidon. Das oder die Lösemittel können nach der Dispersionsbildung falls gewünscht teilweise oder vollständig entfernt werden, beispielsweise durch Destillation gegebenfalls unter vermindertem Druck. Im Falle der zu (meth)acrylierenden Polurethanharze kann es auch zweckmäßig sein, einen Teil der oder die gesamte Menge der zur (Meth)acrylierung eingesetzten olefinisch ungesättigten Monomeren als Lösemittel für die wasserunlöslichen Celluloseester zu verwenden. Die olefinisch ungesättigten Monomeren können dabei als alleiniges Lösemittel oder im Gemisch mit organischen Lösemitteln eingesetzt werden.

Es ist zweckmäßig darauf zu achten, daß der Zusatz und das Vermischen mit wasserunlöslichem Celluloseester noch vor der Zugabe wesentlicher Wassermengen in einem geeigneten Verfahrensabschnitt erfolgt, beispielsweise so, daß störende Nebenreaktionen der wasserunlöslichen Celluloseester oder der in organischen Lösemitteln und/oder in olefinisch ungesättigten Monomeren gelösten wasserunlöslichen Celluloseester mit anderen Bestandteilen der (Reaktions)mischung ausgeschlossen sind. Beispielsweise soll insbesondere eine Gelbildung vermieden werden. Dementsprechend kann die Auswahl der wasserunlöslichen Celluloseester und gegebenenfalls der organischen Lösemittel und/oder der olefinisch ungesättigten Monomeren im jeweiligen Einzelfall getroffen werden.

Bei den Polyurethanharzen A) handelt es sich beispielsweise um isocyanatgruppenfreie carboxyfunktionelle Polyurethanprepolymere A1) oder bevorzugt um in beliebiger Weise zu Polyurethanharzen A2) kettenverlängerte carboxyfunktionelle Polyurethanprepolymere, die jeweils vor der Zugabe wesentlicher Wassermengen zwecks Überführung in die disperse Phase mit einer entsprechenden Menge an wasserunlöslichem Celluloseester vermischt werden. Der hier und nachfolgend gebrauchte Ausdruck "isocyanatgruppenfrei" bedeutet "isocyanatgruppenfrei" und schließt "im wesentlichen isocyanatgruppenfrei" ein, beispielsweise sind im Ausdruck "isocyanatgruppenfreie carboxyfunktionelle Polyurethanprepolymere" auch carboxyfunktionelle Polyurethanprepolymere mit einem restlichen Isocyanatgruppengehalt entsprechend einer auf Festharz bezogenen NCO-Zahl von 0,5 und weniger % eingeschlossen.

Die Herstellung isocyanatgruppenfreier carboxyfunktioneller Polyurethanprepolymerer A1) kann beispielsweise erfolgen durch:
1) Herstellung eines linearen oder verzweigten, nicht gelierten, Carboxylgruppen enthaltenden sowie isocyanatfunktionellen Polyurethanprepolymeren in einem organischen Lösemittel oder in Abwesenheit von Lösemitteln,
2) Umsetzung der freien Isocyanatgruppen des Polyurethanprepolymeren gegebenenfalls nach dessen teilweiser oder vollständiger Neutralisation und Überführung in die wäßrige Phase mit einer oder mehreren gegenüber Isocyanatgruppen zur Addition befähigten monofunktionellen Verbindungen wie beispielsweise Monoalkoholen und/oder primären oder sekundären Monoaminen.

Dabei wird wie vorstehend erwähnt in einem geeigneten Verfahrensabschnitt, beispielsweise nach der Umsetzung der freien Isocyanatgruppen mit den gegenüber Isocyanatgruppen zur Addition befähigten monofunktionellen Verbindungen eine entsprechende Menge an wasserunlöslichem Celluloseester noch vor dem Zusatz wesentlicher Wassermengen zwecks Dispersionsbildung zum Polyurethanprepolymeren zugesetzt und homogen damit vermischt.

Die in Verfahrensschritt 1) erfolgende Herstellung des linearen oder verzweigten, nicht gelierten, Carboxylgruppen enthaltenden sowie isocyanatfunktionellen Polyurethanprepolymeren kann beispielsweise erfolgen durch Umsetzung einer oder mehrerer Verbindungen mit mindestens zwei gegenüber Isocyanat reaktiven Gruppen, insbesondere einem oder mehreren Polyolen, bevorzugt Diolen, mit einem oder mehreren organischen Polyisocyanaten, bevorzugt Diisocyanaten und mit einer oder mehreren Verbindungen mit mehr als einer, bevorzugt zwei gegenüber Isocyanatgruppen reaktiven Gruppen und mindestens einer Carboxylgruppe.

Beispielsweise kann ein als Ausgangsprodukt verwendbares, laterale und/oder terminale NCO-Gruppen enthaltendes, verzweigtes, bevorzugt aber lineares Polyurethanprepolymer hergestellt werden durch Umsetzung in wasserfreiem Milieu von a1) mindestens einer linearen oder verzweigten Verbindung, die mindestens zwei gegenüber Isocyanat reaktive Gruppen trägt, beispielsweise mit einem gewichtsmittleren Molekulargewicht (Mw) von 60 bis 10000, bevorzugt 60 bis 6000, mit a2) mindestens einem organischen Polyisocyanat, insbesondere Diisocyanat und a3) mindestens einer Verbindung mit mehr als einer mit Isocyanat reaktiven Gruppen und mindestens einer Carboxylgruppe, beispielsweise mit einer zahlenmittleren Molmasse (Mn) bis zu 10000, bevorzugt bis zu 2000, in einem NCO/OH-Verhältnis von über 1 bis 4 : 1, bevorzugt von 1,1 bis 2 : 1, besonders bevorzugt von 1,1 bis 1,7 : 1.

Bevorzugt handelt es sich bei der vorstehend genannten linearen oder verzweigten Verbindung der Komponente a1) um mindestens ein Polyol auf der Basis eines oder mehrerer Polyether, Polyester und/oder Polycarbonate, mit mindestens zwei OH-Gruppen im Molekül und einem Zahlenmittel der Molmasse (Mn) von 600 bis 10000, bevorzugt über 1000 und unter 6000, gegebenenfalls unter Mitverwendung von einem oder mehreren zumindest difunktionellen niedermolekularen Alkoholen und/oder Aminen und/oder Aminoalkoholen mit einer Molmasse unter 600, bevorzugt unter 400.

Als Komponente a2) können beliebige organische Polyisocyanate, wie z.B. Diisocyanate eingesetzt werden. Es können aliphatische, cycloaliphatische, aromatische oder araliphatische Diisocyanate eingesetzt werden. Beispiele für geeignete Diisocyanate sind Hexandiisocyanat, Isophorondiisocyanat, Bis-(4-isocyanatocyclohexyl)methan, Bis-(4-isocyanatophenyl)-methan, Tetramethylxylylendiisocyanat und 1,4-Cyclohexandiisocyanat.

Als Komponente a3) können bevorzugt niedermolekulare Verbindungen verwendet werden, die mehr als eine, bevorzugt zwei oder mindestens zwei mit Isocyanatgruppen reagierende Gruppen und mindestens eine Carboxylgruppe enthalten. Geeignete mit Isocyanatgruppen reagierende Gruppen sind insbesondere Hydroxylgruppen und primäre und sekundäre Aminogruppen. Die Carboxylgruppen können beispielsweise durch Verwendung von Hydroxyalkancarbonsäuren als Komponente a3) eingeführt werden. Bevorzugt sind Dihydroxyalkansäuren, insbesondere alpha,alpha-Dimethylolalkansäuren wie alpha,alpha-Dimethylolpropionsäure.

Bei den carboxyfunktionellen Polyurethanharzen A2) kann es sich beispielsweise um wäßrige Polyurethandispersionen A2a) handeln, die durch Kettenverlängerung von gegenüber Polyisocyanaten reaktiven, aktiven Wasserstoff und Carboxylgruppen enthaltenden Polyurethanprepolymeren mit Polyisocyanaten hergestellt werden können.

Dabei wird wie vorstehend erläutert in einem geeigneten Verfahrensabschnitt, beispielsweise vor oder nach der Umsetzung der reaktiven, aktiven Wasserstoff aufweisenden Gruppen des Polyurethanprepolymeren mit kettenverlängerndem Polyisocyanat eine entsprechende Menge an wasserunlöslichem Celluloseester noch vor dem Zusatz wesentlicher Wassermengen zwecks Dispersionsbildung zum Polyurethanprepolymeren oder zum schon kettenverlängerten Polyurethanharz A2a) zugesetzt und homogen damit vermischt.

Bevorzugt handelt es sich bei den carboxyfunktionellen Polyurethanharzen A2) jedoch um wäßrige Polyurethandispersionen A2b), die durch Kettenverlängerung isocyanatund carboxyfunktioneller Polyurethanprepolymerer mit Polyaminen, Hydrazin(derivaten), Wasser und/oder Polyolen hergestellt werden können.

Dabei wird, wie vorstehend erläutert, in einem geeigneten Verfahrensabschnitt, beispielsweise vor oder nach der Umsetzung der Isocyanatgruppen des Polyurethanprepolymeren mit Kettenverlängerern, eine entsprechende Menge an wasserunlöslichem Celluloseester noch vor dem Zusatz wesentlicher Wassermengen zwecks Dispersionsbildung zum Polyurethanprepolymeren oder zum schon kettenverlängerten Polyurethanharz A2b) zugesetzt und homogen damit vermischt.

Beispielsweise kann die Herstellung der Polyurethanharze A2b) erfolgen durch:
1) Herstellung eines linearen oder verzweigten, nicht gelierten, Carboxylgruppen enthaltenden sowie isocyanatfunktionellen Polyurethanprepolymeren in einem organischen Lösemittel oder in Abwesenheit von Lösemitteln,
2) Umsetzung der freien Isocyanatgruppen des Polyurethanprepolymeren gegebenenfalls nach dessen teilweiser oder vollständiger Neutralisation und Überführung in die wäßrige Phase mit einer oder mehreren gegenüber Isocyanatgruppen zur Addition befähigten und eine Kettenverlängerung bewirkenden Verbindungen, ausgewählt aus Polyaminen, Hydrazin(derivaten), Wasser und/oder Polyolen.

Dabei können die Mengenanteile der einzelnen Edukte beispielsweise so gewählt und die Reaktion beispielsweise so geführt werden, daß das fertige Polyurethanharz A2b) ein Zahlenmittel der Molmasse (Mn) von 2500 bis 1000000, eine Hydroxylzahl von 0 bis 100 mg KOH/g, bezogen auf Festharz und eine Säurezahl von 5 bis 60, bevorzugt 10 bis 40 mg KOH/g, bezogen auf Festharz aufweist.

Für den Verfahrensschritt 1) gilt dabei das Gleiche wie vorstehend für den Verfahrensschritt 1) bei der Herstellung der Polyurethanprepolymeren A1) beschrieben.

Das in Verfahrensschritt 1) erhaltene isocyanat- und carboxyfunktionelle Polyurethanprepolymere wird in Verfahrensschritt 2) kettenverlängert durch Umsetzung der freien Isocyanatgruppen mit einer oder mehreren gegenüber Isocyanatgruppen zur Addition befähigten und eine Kettenverlängerung bewirkenden Verbindungen, ausgewählt aus Polyaminen, Hydrazin(derivaten), Wasser und/oder Polyolen. Im Falle von Wasser erfolgt die Kettenverlängerung durch Hydrolyse von NCO-Gruppen zu NH₂-Gruppen und deren spontane Addition an NCO-Gruppen. Die Umsetzung der freien Isocyanatgruppen mit einer oder mehreren gegenüber Isocyanatgruppen zur Addition befähigten und eine Kettenverlängerung bewirkenden Verbindungen kann vor Überführung des in Verfahrensschritt 1) erhaltenen isocyanat- und carboxyfunictionellen Polyurethanprepolymeren in eine wäßrige Dispersion erfolgen. Außer im Falle von Wasser als Kettenverlängerungsmittel erfolgt die Kettenverlängerung jedoch bevorzugt parallel zur oder nach der Überführung in eine wäßrige Dispersion.

Ebenfalls bevorzugte carboxyfunktionelle Polyurethanharze A2) sind wäßrige Polyurethandispersionen A2c), die durch Kettenverlängerung alkoxy- oder acyloxysilan- und carboxyfunktioneller Polyurethanprepolymerer unter Zusatz von Wasser hergestellt werden können.

Dabei wird wie vorstehend erläutert in einem geeigneten Verfahrensabschnitt, beispielsweise vor oder nach der Kettenverlängerung des alkoxy- oder acyloxysilanfunktionellen Polyurethanprepolymeren eine entsprechende Menge an wasserunlöslichem Celluloseester noch vor dem Zusatz wesentlicher Wassermengen zwecks Dispersionsbildung zum Polyurethanprepolymeren oder zum schon kettenverlängerten Polyurethanharz A2c) zugesetzt und homogen damit vermischt.

Die durch Kettenverlängerung alkoxy- oder acyloxysilan- und carboxyfunktioneller Polyurethanprepolymerer unter Zusatz von Wasser hergestellten Polyurethanharze A2c) besitzen beispielsweise eine zahlenmittlere Molmasse (Mn) von 2500 bis 1000000, einen Gehalt beispielsweise von 2 bis 150 mmol, bevorzugt 3 bis 100 mmol, besonders bevorzugt 7 bis 70 mmol Siloxanbrücken (-Si-O-Si-) pro 100 g Festharz, eine Hydroxylzahl von 0 bis 100, bevorzugt 0 bis 60 mg KOH/g, bezogen auf Festharz und eine Säurezahl von 5 bis 60, bevorzugt 10 bis 40 mg KOH/g, bezogen auf Festharz. Die Polyurethanharze A2c) können linear oder verzweigt aufgebaut sein oder in Form von Mikrogelen vorliegen.

Die unter Ausbildung von Siloxanbrücken kettenverlängerten Polyurethanharze A2c) können beispielsweise hergestellt werden, indem man ein Carboxylgruppen enthaltendes Polyurethanprepolymer, das mindestens eine R'OSi- Gruppe aufweist, worin
R' = C1 - bis C8-Alkyl oder C(O)R"', und
R"' = C1- bis C10-Alkyl
und das in Gegenwart eines organischen Lösemittels vorliegen kann, einer Kettenverlängerung unterzieht, indem man Wasser in mindestens stöchiometrischer Menge zur Hydrolyse der R'OSi-Gruppen zusetzt, das Reaktionsprodukt während oder nach der Kettenverlängerung gegebenenfalls nach vollständiger oder teilweiser Neutralisation in eine wäßrige Dispersion überführt.

Die Herstellung der Polyurethanprepolymeren mit R'OSi-Gruppen kann beispielsweise erfolgen durch:
1) Herstellung eines linearen oder verzweigten, nicht gelierten, Carboxylgruppen enthaltenden sowie isocyanatfunktionellen Polyurethanprepolymeren in einem organischen Lösemittel oder in Abwesenheit von Lösemitteln,
2) Umsetzung der freien Isocyanatgruppen des Polyurethanprepolymeren mit einer oder mehreren Verbindungen der allgemeinen Formel

   ((H-X-)ₙR)ₐSi(OR')_{b}(R")_{c} (I)

   mit X = O,S,NH oder NR"", bevorzugt NH oder NR"", R = ein bifunktioneller, trifunktioneller oder tetrafunktioneller, bevorzugt bifunktioneller organischer Rest mit einem Molekulargewicht von 13 bis 500, bevorzugt (Ar)alkylen mit 1 bis 12 C-Atomen, besonders bevorzugt Alkylen mit 1 bis 12 C-Atomen, R' = C1- bis C8-Alkyl oder C(O)R''', bevorzugt C1- bis C4-Alkyl, R" = R"' = C1- bis C10-Alkyl, wobei R" und R"' gleich oder verschieden sein können, R"" = C1- bis C8-Alkyl, a = 1, 2 oder 3, bevorzugt 1, b = 1, 2 oder 3, bevorzugt 2 oder 3, c = 0, 1 oder 2, n = 1 bis 3, bevorzugt 1 oder 2, besonders bevorzugt 1, wobei mehrere Reste R', R" und R''' gleich oder verschieden sind und worin die Summe aus a plus b plus c vier ergibt, gegebenenfalls im Gemisch mit einem oder mehreren NH₂- und/oder NH-Gruppen tragenden Alkanolaminen mit einer OH-Funktionalität von mindestens 1.

Für den Verfahrensschritt 1) gilt dabei das Gleiche wie vorstehend für den Verfahrensschritt 1) bei der Herstellung der Polyurethanprepolymeren A1) beschrieben.

Als einige bevorzugte Beispiele für Verbindungen der allgemeinen Formel (I) seien beta-Aminoethyltriethoxysilan, gamma-Aminopropyltrimethoxysilan, delta-Aminobutyltriethoxysilan genannt.

Die Umsetzung des NCO-funktionellen Polyurethanprepolymeren zum R'OSifunktionalisierten Polyurethanprepolymeren erfolgt unter vollständigem Verbrauch der HX-Gruppen der Verbindungen der allgemeinen Formel (I). Bevorzugt werden Isocyanatgruppen und HX-Gruppen stöchiometrisch im Verhältnis 1 : 1 miteinander zur Reaktion gebracht. Im so erhaltenen Polyurethanprepolymeren gegebenenfalls noch verbliebene restliche freie Isocyanatgruppen können vor der Überführung des Prepolymeren in die Wasserphase mit den üblichen gegenüber Isocyanat zur Addition befähigten, aktiven Wasserstoff enthaltenden Verbindungen; beispielsweise Monoalkohole, Diole, Polyole, Glykolether, Monoamine, Diamine, Polyamine, Hydrazin(derivate), umgesetzt werden.

Das der Polyurethandispersion-zugrundeliegende Polyurethanharz A2c) kann Hydroxylgruppen besitzen. Ist dieses gewünscht, so kann das NCO-Gruppen enthaltende Polyurethanprepolymer bei der Herstellung des R'OSi-funktionalisierten Polyurethanprepolymeren mit mindestens einer Verbindung der allgemeinen Formel (I) und mit mindestens einem NH₂- und/oder NH-Gruppen tragenden Alkanolamin mit einer OH-Funktionalität von mindestens 1 umgesetzt werden. Die Umsetzung erfolgt unter vollständigem Verbrauch der HX-Gruppen der Verbindungen der allgemeinen Formel (I) und der NH-Gruppen des Alkanolamins. Die Isocyanatgruppen des NCO-funktionellen Polyurethanprepolymeren werden mit den HX-Gruppen der Verbindungen der allgemeinen Formel (I) und den NH-Gruppen des Alkanolamins bevorzugt im stöchiometrischen Verhältnis zur Reaktion gebracht. Dabei können das Alkanolamin und die Verbindung der allgemeinen Formel (I) in Mischung oder nacheinander mit dem NCO-funktionellen Polyurethanprepolymer umgesetzt werden.

Bei den NH₂- und/oder NH-Gruppen tragenden Alkanolaminen mit einer OH-FunktionaIität von mindestens 1 handelt es sich um Verbindungen, die als Lieferanten für Hydroxylgruppen in der Polyurethanharzdispersion A2c) dienen können. Die NHoder NH₂-Gruppen der Alkanolamine weisen gegenüber den Isocyanatgruppen des NCO-funktionellen Polyurethanprepolymeren eine im Vergleich zu ihren OH-Gruppen. deutlich höhere Reaktivität auf. Beispiele für geeignete Alkanolamine mit einer OH-Funktionalität von mindestens 1 sind Monoalkanolamine und Dialkanolamine, z.B. Diethanolamin, N-Methylethanolamin, Diisopropanolamin, Monoisopropanolamin, Ethanolamin, 3-Aminopropanol.

Es kann zweckmäßig sein, wenn anstelle der oder gemeinsam mit den NH₂- und/oder NH-Gruppen tragenden Alkanolaminen auch ein oder mehrere aliphatische C4-C36-Alkohole und/oder -Amine eingesetzt werden, deren Umsetzung dann in der Regel unter vollständigem Verbrauch ihrer OH-, NH- und/oder NH₂-Gruppen erfolgt. Fettamine und/oder Fettalkohole mit mehr als 12 C-Atomen sind bevorzugt.

Das R'OSi- und carboxyfunktionelle, gegebenenfalls neutralisierte Polyurethanprepolymer wird einer Hydrolyse und als deren Folge einer Kettenverlängerung unterworfen. Zur Hydrolyse und der damit bedingten Kettenverlängerung kann die gesamte Wassermenge, die zur Herstellung der Dispersion erforderlich ist, verwendet werden. Die R'OSi-Gruppen des Polyurethanprepolymeren sind hydrolyseempfindlich. Über den Verlauf der Wasserzugabe kann gesteuert werden, daß das Polyurethanharz A2c) Silizium in Form von in den Polyurethanteil eingebundenen Siloxanbrücken (-Si-O-Si-) enthält. Dazu erfolgt die Hydrolyse bevorzugt zunächst mit einer geringen zur Überführung in die wäßrige Phase nicht ausreichenden Wassermenge, bevorzugt bis zum zehnfachen stöchiometrischen Überschuß, besonders bevorzugt bis zum fünffachen stöchiometrischen Überschuß, berechnet auf die zur Hydrolyse der R'OSi-Gruppen notwendige Wassermenge. Die Hydrolyse der R'OSi-Gruppen läuft schnell ab. Die durch Hydrolyse gebildeten HOSi-Gruppen kondensieren unter Wasserabspaltung und Ausbildung von Siloxanbrücken und führen damit zu einem kettenverlängerten Polyurethanharz A2c) mit erhöhtem Molekulargewicht. Abhängig vom eingesetzten R'OSi-funktionalisierten Polyurethanprepolymeren werden dabei lineare, verzweigte oder vemetzte Produkte gewonnen, die praktisch frei sind von R'OSi- und/oder HOSi-Gruppen.

Die unter Zusatz einer ausreichenden Wassermenge erfolgende Überführung des lösemittelfrei oder in organischer Lösung vorliegenden Polyurethanharzes in eine wäßrige Dispersion kann während oder nach Abschluß der Kettenverlängerung durch Ausbildung von Siloxanbrücken erfolgen. Die Kettenverlängerung läuft in der Harzphase ab; wenn also das Harz bereits durch Zugabe einer ausreichenden Wassermenge dispergiert ist, so läuft die Kettenverlängerung in den Dispersionsteilchen selbst ab.

Bei den (meth)acrylierten Polyurethanharzen B) handelt es sich um carboxyfunktionelle Hybridpolymere, die beispielsweise hergestellt werden können durch radikalische Polymerisation (meth)acrylisch und gegebenenfalls weiterer olefinisch ungesättigter Monomerer in Gegenwart carboxyfunktioneller Polyurethanharze, bevorzugt in Gegenwart wäßrig dispergierter carboxyfunktioneller Polyurethanharze. Die carboxyfunktionellen Polyurethanharze können olefinische Doppelbindungen enthalten oder frei davon sein.

Dabei wird wie vorstehend erläutert in einem geeigneten Verfahrensabschnitt, beispielsweise vor oder nach Abschluß der Synthese des zu (meth)acrylierenden Polyurethanharzes eine entsprechende Menge an wasserunlöslichem Celluloseester noch vor dem Zusatz wesentlicher Wassermengen zwecks Dispersionsbildung zum Polyurethanharz zugesetzt und homogen damit vermischt. Die (Meth)acrylierung als solche kann vor oder bevorzugt nach dem Zusatz der wesentlichen Wassermengen durchgeführt werden. Hier bei der Herstellung (meth)acrylierter Polyurethanharze B) können die wasserunlöslichen Celluloseester auch als Lösung in einem Teil der oder in der gesamten Menge der zur (Meth)acrylierung eingesetzten olefinisch ungesättigten Monomeren verwendet werden. Die olefinisch ungesättigten Monomeren können dabei als alleiniges Lösemittel oder im Gemisch mit organischen Lösemitteln verwendet werden.

Bei den durch Polymerisation (meth)acrylisch ungesättigter Monomerer in Gegenwart carboxyfunktioneller, bevorzugt in Gegenwart wäßrig dispergierter carboxyfunktioneller Polyurethanharze hergestellten Hybridpolymeren handelt es sich beispielsweise um Polyurethan/Poly(meth)acrylat-Polymerhybride mit einem Gewichtsverhältnis von Polyurethan- zu Poly(meth)acrylatanteil von 0,05 : 1 bis 50 : 1, bevorzugt bis zu 10 : 1, einer Hydroxylzahl von 0 bis 150, bevorzugt unter 100 mg KOH/g, bezogen auf Festharz, und einer Säurezahl von 1,5 bis 60 mg KOH/g, bevorzugt 3 bis 40 mg KOH/g, bezogen auf Festharz. Bevorzugt sind die Carboxylgruppen zu mindestens 70 %, besonders bevorzugt ausschließlich Bestandteil des Polyurethananteils.

Die durch Polymerisation in Gegenwart olefinische Doppelbindungen enthaltender Polyurethanharze hergestellten Hybridpolymeren sind entweder lineare Blockpolymere oder sie besitzen einen verzweigten Aufbau, beispielsweise als Kammpolymer, oder sie liegen in Form von Mikrogelen vor. Sie haben beispielsweise ein Zahlenmittel der Molmasse (Mn) von 8000 bis 1500000 und können einen Gehalt von bis zu 100 mmol Silizium pro 1.00 g Festharz in Form von in den Polyurethanteil eingebundenen Siloxanbrücken (-Si-O-Si) aufweisen.

Die durch Polymerisation in Gegenwart von von olefinischen Doppelbindungen freien Polyurethanharzen hergestellten Hybridpolymeren bestehen aus Polyurethan- und Poly(meth)acrylatanteilen. Dabei können Polyurethan- und Poly(meth)acrylatanteil als interpenetrierendes Netzwerk vorliegen und/oder der Poly(meth)acrylatanteil ist auf den Polyurethananteil gepfropft. Die durch Polymerisation in Gegenwart von von olefinischen Doppelbindungen freien Polyurethanharzen hergestellten Hybridpolymeren können beispielsweise einen Gehalt von bis zu 100 mmol Silizium pro 100 g Festharz in Form von in den Polyurethanteil eingebundenen Siloxanbrücken (-Si-O-Si) aufweisen.

Bei den beim Aufbau des Poly(meth)acrylatanteils der Polyurethan/Poly(meth)acrylat-Polymerhybriden B) zur Polymerisation gelangenden olefinisch ungesättigten Monomeren kann es sich neben den (meth)acrylisch ungesättigten Monomeren um allylisch oder vinylisch ungesättigte Monomere handeln. Bezogen auf die zur Polymerisation gelangenden olefinischen Doppelbindungen beträgt der Anteil allylischer oder vinylischer Doppelbindungen bevorzugt unter 10 %, und der Anteil (meth)acrylischer Doppelbindungen mindestens 50 %, bevorzugt mehr als 70 %.

Beispiele für zur Herstellung der Polyurethan/Poly(meth)acrylat-Polymerhybriden B) verwendbare radikalisch polymerisierbare, olefinisch ungesättigte Monomere sind solche, die keine funktionellen Gruppen tragen. Beispiele sind (Cyclo)alkyl(meth)acrylate, wie beispielsweise Methyl(meth)acrylat, Ethyl(meth)acrylat, Propyl(meth)acrylat, Butyl(meth)acrylat, Hexyl(meth)acrylat, Cyclohexyl(meth)acrylat, Ethylhexyl(meth)acrylat, Dodecyl(meth)acrylat, Lauryl(meth)acrylat, Isobornyl(meth)acrylat sowie monovinylaromatische Verbindungen vorzugsweise mit 8 bis 10 Kohlenstoffatomen je Molekül, wie Styrol, Vinyltoluol; Vinylether und Vinylester, wie Vinylacetat, Vinylversatat; Malein-, Fumar-, Tetrahydrophthalsäuredialkylester.

Neben den nichtfunktionellen Monomeren können auch olefinisch ungesättigte Monomere mit funktionellen Gruppen eingesetzt werden. Beispiele sind solche mit CHaciden, Epoxid-, Hydroxy- oder Carboxylgruppen, wobei carboxyfunktionelle Monomere bevorzugt zu nicht mehr als 30 % der Säurezahl des Polyurethan/Poly(meth)acrylat-Polymerhybrid-Bindemittels B) beitragen.

Beispiele für olefinisch ungesättigte Monomere mit Hydroxylgruppen, die alleine oder gemeinsam mit eventuellen Hydroxylgruppen aus dem Polyurethananteil zur Hydroxylzahl des Hybridpolymeren B) beitragen können, sind Allylalkohol, insbesondere aber Hydroxyalkyl(meth)acrylate, wie Hydroxyethyl(meth)acrylat, Hydroxypropyl(meth)acrylat oder Butandiolmono(meth)acrylat, Glyzerinmono(meth)acrylat, Addukte von (Meth)acrylsäure an Monoepoxide wie z.B. Versaticsäureglycidylester, Addukte von Glycidyl(meth)acrylat an Monocarbonsäuren wie z.B. Essigsäure oder Propionsäure.

Beispiele für carboxylgruppenhaltige olefinisch ungesättigte Monomere sind ungesättigte Carbonsäuren, wie z.B. (Meth)acryl-, Itacon-, Croton-, Isocroton-, Aconit-, Malein- und Fumarsäure, Halbester der Malein- und Fumarsäure.

Weiterhin können auch kleine Anteile von Monomeren mit mindestens zwei polymerisierbaren, olefinischen Doppelbindungen eingesetzt werden. Bevorzugt liegt der Anteil dieser Monomeren unter 5 Gew.-%, bezogen auf das Gesamtgewicht der Monomeren. Beispiele für derartige Verbindungen sind Divinylbenzol, Hexandioldi(meth)acrylat, Ethylenglykoldi(meth)acrylat, Butandioldi(meth)acrylat, Trimethylolpropantri(meth)acrylat und ähnliche Verbindungen.

Bevorzugt können die wäßrigen Bindemitteldispersionen auf der Basis von Polyurethan/Poly(meth)acrylat-Polymerhybriden B) beispielsweise hergestellt werden, indem man ein Carboxylgruppen enthaltendes und durchschnittlich 0,1 bis 2 einer radikalischen Polymerisation zugängliche olefinisch ungesättigte Gruppen pro Molekül - aufweisendes oder von olefinischen Doppelbindungen freies Polyurethanprepolymer, das durchschnittlich bis zu 9, beispielsweise 0,7 bis 9 an Silizium gebundene R'O-Gruppen pro Molekül aufweisen kann, worin
R' = C1- bis C8-Alkyl oder C(O)R''', und
R"' = C1- bis C10-Alkyl
bedeuten, und das in einem gegenüber Isocyanat inerten Lösemittel gelöst vorliegen kann, gegebenenfalls nach vorheriger Neutralisation der Carboxylgruppen durch Zusatz von Wasser in eine wäßrige Dispersion überführt und danach gemeinsam mit olefinisch ungesättigten Monomeren einer radikalischen Polymerisation unterwirft. Dabei können die olefinisch ungesättigten Monomeren vor und/oder nach Herstellung der wäßrigen Dispersion zugesetzt werden. Beispielsweise können die oder ein Teil der olefinisch ungesättigten Monomeren vor der Herstellung der wäßrigen Dispersion die Funktion eines gegenüber Isocyanat inerten Lösemittels übernehmen, welches nicht wieder entfernt werden muß.

Bevorzugt erfolgt die Herstellung der Carboxylgruppen enthaltenden Polyurethanprepolymeren mit gegebenenfalls durchschnittlich 0,1 bis 2 lateralen und/oder terminalen einer radikalischen Polymerisation zugänglichen olefinisch ungesättigten Gruppen pro Molekül und gegebenenfalls durchschnittlich 0,7 bis 9 bevorzugt an laterales und/oder terminales Silizium gebundenen R'O-Gruppen pro Molekül durch:
1) Herstellung eines linearen oder verzweigten, nicht gelierten, von olefinischen Doppelbindungen freien, Carboxylgruppen enthaltenden sowie isocyanatfunktionellen Polyurethanprepolymeren in einem inerten organischen Lösemittel(gemisch) und/oder in einem oder mehreren im Gemisch vorliegenden gegenüber Isocyanat inerten olefinisch ungesättigten Monomeren oder in Abwesenheit von Lösemitteln und olefinisch ungesättigten Monomeren,
2a) Umsetzung der freien Isocyanatgruppen des in 1) erhaltenen Polyurethanprepolymeren
   a1) mit einer oder mehreren Verbindungen der allgemeinen Formel (I) wie vorstehend zur Herstellung durch Siloxanbrücken kettenverlängerter Polyurethanharze A2) beschrieben,
   a2) gegebenenfalls mit einem oder mehreren zur Addition an Isocyanatgruppen befähigten, olefinisch ungesättigten Monomeren,
   a3) gegebenenfalls mit einem oder mehreren NH₂- und/oder NH-Gruppen tragenden Alkanolaminen mit einer OH-Funktionalität von mindestens 1,
   a4) gegebenenfalls mit einem oder mehreren aliphatischen C4-C36-Alkoholen und/oder -Aminen,
   oder
2b) Umsetzung der freien Isocyanatgruppen des in 1) erhaltenen Polyurethanprepolymeren
   b1) gegebenenfalls mit einem oder mehreren zur Addition an Isocyanatgruppen befähigten, olefinisch ungesättigten Monomeren,
   b2) gegebenenfalls mit einem oder mehreren NH₂- und/oder NH-Gruppen tragenden Alkanolaminen mit einer OH-Funktionalität von mindestens 1, und
   b3) gegebenenfalls mit einem oder mehreren aliphatischen C4-C36-Alkoholen und/oder -Aminen.

Für den Verfahrensschritt 1) gilt dabei das Gleiche wie vorstehend für den Verfahrensschritt 1) bei der Herstellung der Polyurethanprepolymeren A1) beschrieben, wobei das isocyanatfunktionelle Polyurethanprepolymere hier in einem inerten organischen Lösemittel(gemisch) und/oder in einem oder mehreren im Gemisch vorliegenden gegenüber Isocyanat inerten olefinisch ungesättigten Monomeren oder in Abwesenheit von Lösemitteln und olefinisch ungesättigten Monomeren hergestellt werden kann.

Das in Verfahrensschritt 1) erhaltene NCO-Gruppen enthaltende Polyurethanprepolymer wird in Verfahrensschritt 2a)
a1) mit einer oder mehreren Verbindungen der allgemeinen Formel (I)
a2) gegebenenfalls mit einem oder mehreren zur Addition an Isocyanatgruppen befähigten, olefinisch ungesättigten Monomeren,
a3) gegebenenfalls mit einem oder mehreren NH₂- und/oder NH-Gruppen tragenden Alkanolaminen mit einer OH-Funktionalität von mindestens 1, und
a4) gegebenenfalls mit einem oder mehreren aliphatischen C4-C36-Alkoholen und/oder -Aminen
zu einem Carboxylgruppen enthaltenden, R'OSi-funktionalisierten und olefinische Doppelbindungen enthaltenden oder von olefinischen Doppelbindungen freien Polyurethanprepolymeren umgesetzt. Bezüglich der Verbindungen der allgemeinen Formel (I) gilt das Gleiche wie vorstehend beschrieben.

Bei den im optionalen Verfahrensschritt a2) eingesetzten, zur Addition an Isocyanatgrupppen befähigten, olefinisch ungesättigten Monomeren handelt es sich um Verbindungen mit aktivem Wasserstoff und mit bevorzugt nur einer polymerisierbaren olefinischen Doppelbindung im Molekül. Aktiver Wasserstoff ist beispielsweise enthalten in Hydroxylgruppen, NH-Gruppen, NH₂-Gruppen oder Mercaptangruppen. Bevorzugt sind Verbindungen mit aktivem Wasserstoff in Form von Hydroxylgruppen, bevorzugt mit nur einer Hydroxylgruppe, und mit einer polymerisierbaren olefinischen Doppelbindung im Molekül, insbesondere in Gestalt einer (Meth)acryloylgruppe. Beispiele für solche Verbindungen sind Allylalkohol, insbesondere aber Hydroxyalkyl(meth)acrylate, wie Hydroxyethyl(meth)acrylat, Hydroxypropyl(meth)acrylat oder Butandiolmono(meth)acrylat, Glyzerinmono(meth)acrylat, Addukte von (Meth)acrylsäure an Monoepoxide wie z.B. Versaticsäureglycidylester, Addukte von Glycidyl(meth)acrylat an Monocarbonsäuren wie z.B. Essigsäure oder Propionsäure.

Die Umsetzung des NCO-funktionellen Polyurethanprepolymeren zum R'OSifunktionalisierten Polyurethanprepolymeren erfolgt unter vollständigem Verbrauch der HX-Gruppen der Verbindungen I sowie bevorzugt auch der gegenüber Isocyanat reaktiven Gruppen der gegebenenfalls eingesetzten olefinisch ungesättigten Monomeren.

Das Polyurethan/Poly(meth)acrylat-Hybridpolymere B) kann Hydroxylgruppen besitzen. Dazu kann das NCO-Gruppen enthaltende Polyurethanprepolymer bei der Herstellung des R'OSi-funktionalisierten Polyurethanprepolymeren im Rahmen des optionalen Verfahrensschrittes a3) mit mindestens einem NH₂- und/oder NH-Gruppen tragenden Alkanolamin mit einer OH-Funktionalität von mindestens 1 umgesetzt werden. Die Umsetzung erfolgt dann unter vollständigem Verbrauch der NH₂- und/oder NH-Gruppen des Alkanolamins.

Bei den NH₂- und/oder NH-Gruppen tragenden Alkanolaminen mit einer OH-Funktionalität von mindestens 1 handelt es sich um Verbindungen, die als Lieferanten für Hydroxylgruppen dienen können und allein oder gemeinsam mit eventuellen Hydroxylgruppen aus dem Polymerisatanteil zur Hydroxylzahl von B) beitragen.

Es kann zweckmäßig sein, wenn anstelle der oder gemeinsam mit den NH₂- und/oder NH-Gruppen tragenden Alkanolaminen im optionalen Verfahrensschritt a4) auch ein oder mehrere aliphatische C4-C36-Alkohole und/oder -Amine eingesetzt werden, deren Umsetzung dann in der Regel unter vollständigem Verbrauch ihrer OH-, NH- und/oder NH₂-Gruppen erfolgt.

Im Polyurethanprepolymeren gegebenenfalls noch verbliebene restliche freie Isocyanatgruppen können vor der Überführung des Prepolymeren in die Wasserphase mit den üblichen gegenüber Isocyanat zur Addition befähigten, aktiven Wasserstoff enthaltenden Verbindungen umgesetzt werden.

Das R'OSi- und carboxyfunktionelle, gegebenenfalls neutralisierte Polyurethanprepolymer wird einer Hydrolyse und als deren Folge einer Kettenverlängerung unterworfen. Hierbei gelten die entsprechenden vorstehend im Zusammenhang mit der Herstellung der Polyurethanharze A2c) gegebenen Erläuterungen.

Anstelle der Umsetzungen gemäß Verfahrensschritt 2a) kann das in Verfahrensschritt 1) erhaltene NCO-Gruppen enthaltende Polyurethanprepolymer auch gemäß Verfahrensschritt 2b)
b1) gegebenenfalls mit einem oder mehreren zur Addition an Isocyanatgruppen befähigten, olefinisch ungesättigten Monomeren,
b2) gegebenenfalls mit einem oder mehreren NH₂- und/oder NH-Gruppen tragenden Alkanolaminen mit einer OH-Funktionalität von mindestens 1,
b3) gegebenenfalls mit einem oder mehreren aliphatischen C4-C36-Alkoholen und/oder -Aminen
zu einem Carboxyl- und NCO-Gruppen enthaltenden und olefinische Doppelbindungen enthaltenden oder von olefinischen Doppelbindungen freien Polyurethanprepolymeren umgesetzt und nachfolgend gegebenenfalls nach teilweiser oder vollständiger Neutralisation und Überführung in die wäßrige Phase mit einer oder mehreren gegenüber Isocyanatgruppen zur Addition befähigten und eine Kettenverlängerung bewirkenden Verbindungen, ausgewählt aus Polyaminen, Hydrazin(derivaten), Wasser und/oder Polyolen zu einem Carboxylgruppen enthaltenden und olefinische Doppelbindungen enthaltenden oder von olefinischen Doppelbindungen freien Polyurethanharz kettenverlängert werden. Hierbei gelten die entsprechenden vorstehend im Zusammenhang mit der Herstellung der Polyurethanharze A2b) gegebenen Erläuterungen.

Nach Erstellung der wäßrigen Dispersion des olefinische Doppelbindungen enthaltenden oder von olefinischen Doppelbindungen freien, Carboxylgruppen enthaltenden und kettenverlängerten Polyurethanharzes erfolgt die letzte Synthesestufe bei der Herstellung der Bindemitteldispersion B). Dabei handelt es sich um die (Meth)acrylierung, nämlich den Aufbau des Polymerisatanteils des Polyurethan/Poly(meth)acrylat-Polymerhybrid-Bindemittels B) durch radikalische Polymerisation nach an sich bekannten Methoden. Bei der radikalischen Polymerisation kann es sich um eine Copolymerisation bzw. Pfropfpolymerisation der olefinisch ungesättigten Monomeren mit den bzw. auf die lateralen und/oder terminalen olefinischen Doppelbildungen des Polyurethanharzes handeln, oder es handelt sich um eine in Gegenwart des von olefinischen Doppelbindungen freien Polyurethanharzes ablaufende Polymerisation der zum Aufbau des Polymerisatanteils des Polyurethan/Poly(meth)acrylat-Polymerhybrid-Bindemittels B) verwendeten olefinisch ungesättigten Monomeren, oder es handelt sich um eine durch H-Abstraktion vom von olefinischen Doppelbindungen freien Polyurethanharz eingeleitete Pfropfpolymerisation der zum Aufbau des Polymerisatanteils des Polyurethan/Poly(meth)acrylat-Polymerhybrid-Bindemittels B) verwendeten olefinisch ungesättigten Monomeren auf den Polyurethananteil des Polyurethan/Poly(meth)acrylat-Polymerhybrid-Bindemittels B). Werden bei der radikalischen Polymerisation der olefinisch ungesättigten Monomere auch polyungesättigte Monomere verwendet, so kann die radikalische Polymerisation so erfolgen, daß die polyungesättigten Monomeren vollständig einpolymerisiert werden oder nur ein Teil der polyungesättigten Monomeren unter unvollständigem Verbrauch ihrer olefinischen Doppelbindungen einpolymerisiert wird. Beispielsweise kann ein Teil der polyungesättigten Monomeren mit nur einem Teil ihrer - jeweiligen ungesättigten Gruppen einpolymerisiert werden, so daß der Polymerisatanteil des resultierenden Polyurethan/Poly(meth)acrylat-Polymerhybriden B) noch olefinische Doppelbindungen aufweisen kann.

Die radikalische Polymerisation wird beispielsweise bei Temperaturen zwischen 20 und 95°C, bevorzugt zwischen 60 und 90°C, durchgeführt.

Es sind übliche Radikalinitiatoren geeignet, die in üblichen Mengen eingesetzt werden können; Beispiele sind Peroxidverbindungen wie Dialkylperoxide, Diacylperoxide, organische Hydroperoxide, Perester, Ketonperoxide; Azoverbindungen, wie Azobisisobutyronitril. Bevorzugt sind wasserlösliche Radikalinitiatoren wie beispielsweise Wasserstoffperoxid, Ammoniumperoxodisulfat, Ammoniumpersulfat, sowie wasserlösliche Azoinitiatoren. Ebenfalls möglich ist es, die Polymerisation als Redoxpolymerisation durchzuführen unter Verwendung entsprechender Redoxinitiatorsysteme wie beispielsweise Natriumsulfit, Natriumdithionit, Ascorbinsäure und Peroxidverbindungen.

Bei der Herstellung der wasserunlösliche Celluloseester enthaltenden Bindemitteldispersionen A) und B) werden jeweils zunächst Polyurethanprepolymere hergestellt. Die Umsetzung der zum Aufbau der Polyurethanprepolymeren eingesetzten Komponenten erfolgt im wasserfreien Milieu beispielsweise bei Temperaturen von 20 bis 140°C, bevorzugt zwischen 50 und 100°C. Es kann lösemittelfrei gearbeitet werden oder es wird in dem Fachmann an sich geläufigen für die Polyurethansynthese geeigneten organischen Lösemitteln gearbeitet. Als Lösemittel können wassermischbare Lösemittel oder wasserunmischbare Lösemittel eingesetzt werden. Bei den Lösemitteln kann es sich um solche handeln, die in jedem Stadium der Herstellung der wasserunlösliche Celluloseester enthaltenden Bindemitteldispersionen A) und B) (beispielsweise nach deren Fertigstellung) entfernt werden können, beispielsweise durch Abdestillieren gegebenenfalls unter vermindertem Druck. Beispiele sind Ketone, z.B. Aceton, Methylethylketon, Methylisobutylketon; N-Alkylpyrrolidone, wie z.B. N-Methylpyrrolidon; Ether, wie z.B. Diethylenglykoldimethylether, - Dipropylenglykoldimethylether, oder auch cyclische Harnstoffderivate, wie 1,3-Dimethyl-3,4,5,6-tetrahydro-2(1H)-pyrimidinon.

Der Festkörpergehalt der in den zur Herstellung der erfindungsgemäßen wäßrigen Überzugsmittel eingesetzten, wasserunlösliche Celluloseester enthaltenden Polyurethandispersionen A) bzw. Polyurethan/Poly(meth)acrylat-Polymerhybriddispersionen B) beträgt beispielsweise zwischen 25 und 65 Gew.-%, bevorzugt über 35 und unter 60 Gew.-%.

Zur Herstellung der erfindungsgemäßen wäßrigen Überzugsmittel werden Pigmente mit den wäßrigen Bindemitteldispersionen A) und/oder B) sowie gegebenenfalls mit weiteren Bindemitteln C), Vernetzern, Füllstoffen, lacküblichen Additiven und Lösemitteln vermischt.

Die erfindungsgemäßen wäßrigen Überzugsmittel können neben den wäßrigen Bindemitteldispersionen A) und/oder B) ein oder mehrere davon unterschiedliche zusätzliche Bindemittel C) enthalten, wozu auch gegebenenfalls in den wäßrigen Überzugsmitteln enthaltene Pastenharze zählen. Die Menge der zugesetzten Harze C) kann 0 bis 75 Gew.-% des gesamten Harzfestkörpers betragen. In diesem Zusammenhang bedeutet Harzfestkörper die Summe aller Bindemittel A) plus B) plus C) ohne einen Vernetzer- und ohne einen Pastenharzanteil.

Beispiele für solche zusätzliche, von A) und B) unterschiedliche Bindemittel C) sind dem Fachmann geläufige übliche filmbildende, wasserverdünnbare Bindemittel, wie wasserverdünnbare Polyesterharze, wasserverdünnbare Poly(meth)acrylatharze oder wasserverdünnbare Polyester/Poly(meth)acrylathybride sowie von wasserunlöslichen Celluloseestern freie wasserverdünnbare Polyurethanharze oder Polyurethan/Poly(meth)acrylathybride. Es kann sich um reaktive oder nicht-funktionelle Harze C) handeln.

Die erfindungsgemäßen wäßrigen Überzugsmittel können selbsttrocknend (physikalisch trocknend), selbstvemetzend oder fremdvernetzend sein. Dementsprechend können die erfindungsgemäßen wäßrigen Überzugsmittel Vemetzer für die Bindemittelkomponenten A), B) und/oder C) enthalten, wie beispielsweise Amin-Formaldehydkondensationsharze, z.B. Melaminharze, sowie freie oder blockierte Polyisocyanate. Die Wahl der gegebenenfalls verwendeten Vernetzer hängt von der Art der vernetzungsfähigen Gruppen von A), B) und/oder C) ab und ist dem Fachmann geläufig. Die Vernetzer können einzeln oder im Gemisch eingesetzt werden. Das Mischungsverhältnis von Vernetzern zu Bindemitteln A) plus B) plus C) beträgt bevorzugt 10 : 90 bis 40 : 60, besonders bevorzugt 20 : 80 bis 30 : 70, jeweils bezogen auf das Festkörpergewicht.

Weiterhin können die erfindungsgemäßen wäßrigen Überzugsmittel lacktechnische Additive enthalten, beispielsweise rheologiebeeinflussende Mittel, wie hochdisperse Kieselsäure, anorganische Schichtsilikate, vernetzte oder unvernetzte Polymermikroteilchen, polymere Harnstoffverbindungen, wasserlösliche Celluloseether oder synthetische Polymere mit ionischen und/oder assoziativ wirkenden Gruppen; Antiabsetzmittel; Verlaufsmittel; Lichtschutzmittel; Katalysatoren; Antischaummittel; Netzmittel; Haftvermittler.

Die erfindungsgemäßen wäßrigen Überzugsmittel enthalten Basen als Neutralisationsmittel für die Carboxylgruppen der Bindemittel A) und B). Beispiele für Basen sind Amine, bevorzugt tert.-Amine. Geeignete tertiäre Amine sind z.B. Trialkylamine, wie Triethylamin; N-Alkylmorpholine, wie N-Methylmorpholin.

Weitere Beispiele sind Aminoalkohole wie z.B. N-Dimethylethanolamin oder 2-Amino-2-methyl-1-propanol.

Der Lösemittelanteil der erfindungsgemäßen wäßrigen Überzugsmittel beträgt bevorzugt unter 20 Gew.-%, besonders bevorzugt unter 15 Gew.-%, insbesondere bevorzugt unter 10 Gew.-%. Es handelt sich um übliche lacktechnische Lösemittel, diese können von der Herstellung der Bindemittel stammen oder werden separat zugegeben. Beispiele für solche Lösemittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit Cl-6-Alkyl, Ethoxypropanol, Butylglykol; Glykole z.B. Ethylenglykol; Propylenglykol, und dessen Oligomere, N-Alkylpyrrolidone, wie z.B. N-Methylpyrrolidon sowie Ketone wie Methylethylketon, Aceton, Cyclohexanon; aromatische oder aliphatische Kohlenwasserstoffe.

Die erfindungsgemäßen wäßrigen Überzugsmittel können ein oder mehrere anorganische und/oder organische farb- und/oder effektgebende Pigmente und gegebenenfalls zusätzlich mindestens einen Füllstoff enthalten.

Beispiele für effektgebende Pigmente sind Metallpigmente, z.B. aus Aluminium, Kupfer oder anderen Metallen; Interferenzpigmente wie z.B. metalloxidbeschichtete Metallpigmente, z.B. titandioxidbeschichtetes Aluminium, beschichtete Glimmer wie z.B. titandioxidbeschichteter Glimmer und Graphiteffektpigmente. Beispiele für farbgebende Pigmente und Füllstoffe sind Titandioxid, mikronisiertes Titandioxid, Eisenoxidpigmente, Ruß, Siliciumdioxid, Bariumsulfat, mikronisierter Glimmer, Talkum, Kaolin, Kreide, Azopigmente, Phthalocyaninpigmente, Chinacridonpigmente, Pyrrolopyrrolpigmente, Perylenpigmente.

Die Effektpigmente werden im allgemeinen in Form einer handelsüblichen wäßrigen oder nicht-wäßrigen Paste vorgelegt, gegebenenfalls mit bevorzugt wasserverdünnbaren, organischen Lösemitteln und Additiven versetzt und danach mit dem wäßrigen Bindemittel vermischt. Pulverförmige Effektpigmente können zunächst mit bevorzugt wasserverdünnbaren organischen Lösemitteln und Additiven zu einer Paste verarbeitet werden. Farbpigmente und/oder Füllstoffe können beispielsweise in einem Teil des wäßrigen Bindemittels angerieben werden. Bevorzugt kann das Anreiben auch in einem speziellen wasserverdünnbaren Pastenharz geschehen. Danach wird mit dem restlichen Anteil des wäßrigen Bindemittels oder des wäßrigen Pastenharzes zur fertigen Farbpigmentanreibung komplettiert.

Bevorzugt handelt es sich bei den erfindungsgemäßen wäßrigen Überzugsmitteln um Wasserbasislacke, wie sie für Mehrschichtlackierungen eingesetzt und mit transparenten Klarlacken überlackiert werden. Ein solcher Wasserbasislack besitzt beispielsweise einen Festkörpergehalt von 10 bis 50 Gew.-%, für Effektwasserbasislacke liegt er beispielsweise bevorzugt bei 15 bis 30 Gew.-%, für unifarbige Wasserbasislacke liegt er bevorzugt höher, beispielsweise bei 20 bis 45 Gew.-%. Das Verhältnis von Pigment zu Bindemittel plus gegebenenfalls Vemetzer plus gegebenenfalls Pastenharz im Wasserbasislack beträgt beispielsweise zwischen 0,03 : 1 bis 3 : 1, für Effektwasserbasislacke liegt es beispielsweise bevorzugt bei 0,06 : 1 bis 0,6 : 1, für unifarbige Wasserbasislacke liegt es bevorzugt höher, beispielsweise bei 0,06 : 1 bis 2,5 : 1, jeweils bezogen auf das Festkörpergewicht.

Die erfindungsgemäßen wäßrigen Überzugsmittel sind insbesondere als Wasserbasislacke zur Erstellung der farb- und/oder effektgebenden Überzugsschicht innerhalb einer Mehrschichtlackierung geeignet. Die erfindungsgemäßen Wasserbasislacke können nach üblichen Methoden appliziert werden. Bevorzugt werden sie durch Spritzen in einer Trockenschichtdicke von 8 bis 50 µm appliziert, für Effektwasserbasislacke liegt die Trockenschichtdicke beispielsweise bevorzugt bei 10 bis 25 µm, für unifarbige Wasserbasislacke liegt sie bevorzugt höher, beispielsweise bei 10 bis 40 µm. Die Applikation erfolgt bevorzugt im Naß-in-Naß-Verfahren, d.h. nach einer Ablüftphase, z.B. bei 20 bis 80°C, werden die Wasserbasislackschichten mit einem Klarlack in einer Trockenschichtdicke von bevorzugt 30 bis 60 µm überlackiert und gemeinsam mit diesem bei Temperaturen von beispielsweise 20 bis 150°C getrocknet oder vernetzt. Die Trocknungsbedingungen der Decklackschicht (erfindungsgemäßer Wasserbasislack und Klarlack) richten sich nach dem verwendeten Klarlacksystem. Für Reparaturzwecke sind beispielsweise Temperaturen von 20 bis 80°C bevorzugt. Für Zwecke der Serienlackierung sind Temperaturen über 100°C, beispielsweise über 110°C bevorzugt.

Als Klarlacke können sowohl lösungsmittelhaltige 1 - oder 2-Komponenten-Klarlacke, wasserverdünnbare Klarlacke, Pulverklarlacke, wäßrige Pulverklarlackdispersionen oder durch Strahlung härtbare Klarlacke eingesetzt werden.

So erstellte Mehrschichtlackierungen können auf verschiedenste Arten von Substraten aufgebracht werden. Im allgemeinen handelt es sich um metallische oder Kunststoff-Untergründe. Diese sind häufig vorbeschichtet, d.h. Kunststoffsubstrate können z.B. mit einer Kunststoffgrundierung versehen sein, metallische Substrate besitzen im allgemeinen eine elektrophoretisch aufgebrachte Grundierung und gegebenenfalls zusätzlich eine oder mehrere weitere Lackschichten, wie z.B. eine Füllerschicht. Diese Schichten sind im allgemeinen ausgehärtet.

Mit den erfindungsgemäßen Wasserbasislacken erhaltene Mehrschichtlackierungen entsprechen den heute üblichen Anforderungen in der Kraftfahrzeuglackierung. Die erfindungsgemäßen Wasserbasislacke sind somit geeignet für die Fahrzeugerstlackierung und -reparaturlackierung, sie können jedoch auch in anderen Bereichen, z.B. der Kunststofflackierung, insbesondere der Fahrzeugteilelackierung, eingesetzt werden.

Die Erfindung betrifft weiterhin ein Substrat, beschichtet mit einem Mehrschichtüberzug, der erhalten worden ist durch Aufbringen mindestens einer Grundierungsschicht, Aufbringen einer farb- und/oder effektgebenden Basislackschicht mit einem erfindungsgemäßen wäßrigen Überzugsmittel, gegebenenfalls Trocknen der Basislackschicht und Aufbringen eines transparenten Überzugsmittels als Deckschicht und anschließende Erhitzung des beschichteten Substrates. Es können zu dieser Mehrschichtlackierung gegebenenfalls weitere zusätzliche Schichten hinzugefügt werden.

Trotz niedriger Gehalte wasserunlöslicher Celluloseester in den Dispersionsteilchen der in den erfindungsgemäßen Überzugsmitteln enthaltenen Bindemitteldispersionen A) und/oder B) weisen die erfindungsgemäßen Überzugsmittel ein vorteilhaftes rheologisches Verhalten auf, das sich beispielsweise im Falle der Herstellung von Effektlackierungen vom Typ Effektwasserbasislack/Klarlack in der Erzielung einer hervorragenden Effektausprägung ausdrückt. Die Lagerstabilität der erfindungsgemäßen wäßrigen Überzugsmittel ist gut, beispielsweise im Sinne eines günstigen Absetzverhaltens ohne Pigmentseparation. Das Bewitterungsverhalten von aus den erfindungsgemäßen wäßrigen Überzugsmitteln hergestellten Mehrschichtlackierungen vom Typ Basislack/Klarlack ist gut.

### Beispiel 1 (Herstellung einer Polymerisatdispersion):

### a) Herstellung eines carboxyfunktionellen, epoxidgruppenhaltigen Polymeren:

In eine Lösung von 141 g eines Polyesters (OH-Zahl = 88 mg KOH/g), hergestellt auf der Basis von Phthalsäureanhydrid, Isophthalsäure, Maleinsäureanhydrid, Propanol und Glycerin wie in der DE-A-28 11 913 beschrieben, in 70 g Methylethylketon, wurden 100 g eines Anhydridgemisches (Säurezahl/H₂O = 486 mg KOH/g), hergestellt durch Umsetzung von Trimellithsäureanhydrid mit Propandiol-1,2, bestehend somit aus Trimellithsäureanhydrid und Anhydriden der nachstehenden Formeln 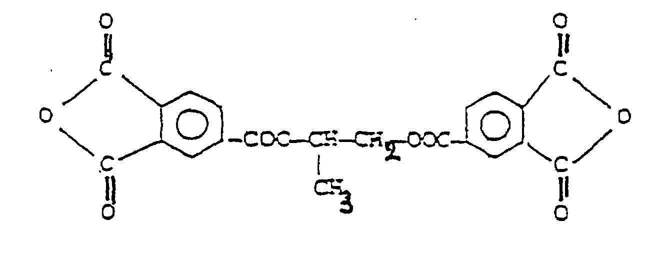 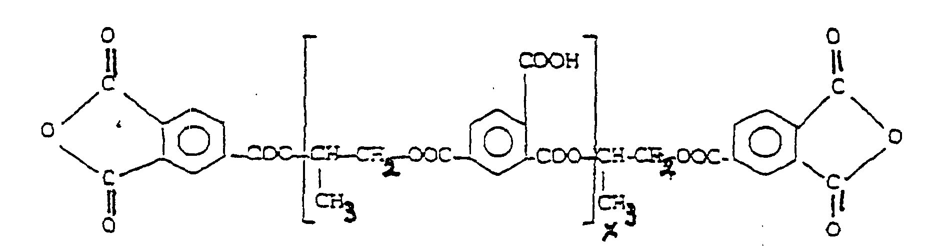 x = 1 bis 8
die in 108 g Xylol bei 50°C homogenisiert worden waren, innerhalb 1 Stunde zugetropft. Bei 90°C wurde so lange gerührt, bis das Reaktionsgemisch eine Säurezahl in Wasser von 165 mg KOH/g (100 %iges Harz) erreicht hatte. Danach wurden 12 g Wasser zugemischt und nach 6-stündigem Rühren bei 80°C eine Säurezahl in Butanol von 168 mg KOH/g (100 %iges Harz) erreicht. Die Gemischtemperatur wurde auf 60°C gesenkt und nach Zugabe von 0,3 g Lithiumbenzoat 132 g eines epoxydierten Leinöls (Epoxidzahl = 8,7) innerhalb von 2 Stunden zugetropft und die Mischung so lange gerührt, bis die Säurezahl in Butanol auf 86,5 abgesunken war. Anschließend wurde eine Mischung von 42 g Dimethylamin (60 %ig in Wasser) in 860 g Wasser eingerührt. Es wurde eine hellgelbe, opaleszierende Lösung erhalten, aus der bei 0,1 bar und 40°C das organische Lösungsmittel abdestilliert wurde. Nach Filtration wurde eine gelbliche, praktisch klare wäßrige Harzlösung erhalten. Festkörpergehalt: 32 Gew.-% (1 Stunde bei 125°C).

### b) Herstellung einer Polymerisatdispersion

In einen Reaktor, ausgerüstet mit Rührer, Rückflußkühler, Innenthermometer und Dosiervorrichtung für die Monomeren, sowie den Initiator, wurden 705 g der in a) erhaltenen wäßrigen (32 %igen) Dispersion und 196 g Wasser gefüllt. Diese Mischung wurde unter Rühren auf 80°C erwärmt und eine Lösung von 0,5 g Ammoniumperoxydisulfat in 35 g Wasser zugesetzt. 5 Minuten nach der Zugabe des Initiators wurden 35 g einer Monomerenmischung aus 125 g Methylmethacrylat, 94 g n-Butylacrylat und 17 g Glycidylmethacrylat zugesetzt und nach weiteren 15 Minuten Vorpolymerisation wurde die verbliebene Monomermenge über 2 Stunden zudosiert. 10 Minuten nach Beendigung der Zugabe wurden weitere 0,2 g Ammoniumperoxydisulfat, gelöst in 10 g Wasser, innerhalb von 10 Minuten zugesetzt und der Ansatz noch 2 Stunden bei 80°C gerührt, um vollständigen Umsatz zu erzielen. Es resultierte eine stabile wäßrige Dispersion, die mit deionisiertem Wasser auf einen Feststoffgehalt von 40 Gew.-% eingestellt wurde.

### Beispiel 2a (Herstellung einer Polyurethandispersion)

1005 g eines linearen Polyesters (aufgebaut aus Adipinsäure, Isophthalsäure und Hexandiol mit einer OH-Zahl von 102) werden auf 90°C erwärmt und es werden 1,8 g Trimethylolpropan sowie 393 g Isophorondiisocyanat zugesetzt. Bei 90°C wird umgesetzt bis die NCO-Zahl 3,8 beträgt. Nach Abkühlen auf 60°C werden eine Lösung aus 35,3 g Dimethylolpropionsäure, 26,1 g Triethylamin und 250 g N-Methylpyrrolidon zugegeben. Nach Erwärmen auf 80°C wird gehalten, bis eine NCO-Zahl von 1,5 erreicht ist. Es wird mit der molaren Menge deionisiertem Wasser gemischt und die Lösung wird bei 80°C gehalten, bis kein NCO mehr nachweisbar ist. Anschließend wird der Ansatz durch Zugabe von deionisiertem Wasser in eine wäßrige Dispersion mit einem Feststoffgehalt von 30 Gew.-% überführt.

### Beispiel 2b (Herstellung einer wasserunlöslichen Celluloseester enthaltenden Polyurethandispersion)

1005 g eines linearen Polyesters (aufgebaut aus Adipinsäure, Isophthalsäure und Hexandiol mit einer OH-Zahl von 102) werden auf 90°C erwärmt und es werden 1,8 g Trimethylolpropan sowie 393 g Isophorondiisocyanat zugesetzt. Bei 90°C wird umgesetzt bis die NCO-Zahl 3,8 beträgt. Nach Abkühlen auf 60°C werden eine Lösung aus 35,3 g Dimethylolpropionsäure, 26,1 g Triethylamin und 150 g N-Methylpyrrolidon zugegeben. Nach Erwärmen auf 80°C wird gehalten, bis eine NCO-Zahl von 1,5 erreicht ist. Es wird mit der molaren Menge deionisiertem Wasser gemischt und die Lösung wird bei 80°C gehalten, bis kein NCO mehr nachweisbar ist. Eine Lösung von 36 g Celluloseacetobutyrat (Acetylgehalt 2 Gew.-%, Butyrylgehalt 52 Gew.-%) in 100 g N-Methylpyrrolidon wird homogen untergemischt. Anschließend wird der Ansatz durch Zugabe von deionisiertem Wasser in eine wäßrige Dispersion mit einem Feststoffgehalt von 30 Gew.-% überführt.

### Beispiel 3a (Herstellung einer Polyurethandispersion)

339 g eines Polyesters aus Adipinsäure, Hexandiol und Isophthalsäure (OH-Zahl 104) und 19 g Dimethylolpropionsäure werden in 160 g N-Methylpyrrolidon gelöst und auf 40°C erwärmt. Danach werden 125 g Isophorondiisocyanat so zugegeben, daß eine Reaktionstemperatur von 80°C nicht überschritten wird. Es wird so lange gehalten, bis ein NCO-Gehalt von 2 % (bezogen auf Festharz) bestimmt nach DIN 53 185 erreicht ist. Danach werden nacheinander 14,6 g 3-Aminopropyltriethoxysilan und 16,2 g Diethanolamin zugegeben. Die Reaktionsmischung wird solange bei 80°C gehalten bis keine freien NCO-Gruppen mehr nachweisbar sind (Titration). Zur Neutralisation wird eine Mischung von 12,6 g Triethylamin und 12,6 g deionisiertem Wasser zugegeben und gut eingearbeitet. Anschließend wird der Ansatz durch Zugabe von deionisiertem Wasser in eine wäßrige Dispersion mit einem Feststoffgehalt von 30 Gew.-% überführt.

### Beispiel 3b (Herstellung einer wasserunlöslichen Celluloseester enthaltender Polyurethandispersion)

339 g eines Polyesters aus Adipinsäure, Hexandiol und Isophthalsäure (OH-Zahl 104) und 19 g Dimethylolpropionsäure werden in 100 g N-Methylpyrrolidon gelöst und auf 40°C erwärmt. Danach werden 125 g Isophorondiisocyanat so zugegeben, daß eine Reaktionstemperatur von 80°C nicht überschritten wird. Es wird so lange gehalten, bis ein NCO-Gehalt von 2 % (bezogen auf Festharz) bestimmt nach DIN 53 185 erreicht ist. Danach werden nacheinander 14,6 g 3-Aminopropyltriethoxysilan und 16,2 g Diethanolamin zugegeben. Die Reaktionsmischung wird solange bei 80°C gehalten bis keine freien NCO-Gruppen mehr nachweisbar sind (Titration). Eine Lösung von 21 g Celluloseacetobutyrat (Acetylgehalt 2 Gew.-%, Butyrylgehalt 52 Gew.-%) in 60 g N-Methylpyrrolidon wird homogen untergemischt. Zur Neutralisation wird eine Mischung von 12,6 g Triethylamin und 12,6 g deionisiertem Wasser zugegeben und gut eingearbeitet. Anschließend wird der Ansatz durch Zugabe-von deionisiertem Wasser in eine wäßrige Dispersion mit einem Feststoffgehalt von 30 Gew.-% überführt.

### Beispiel 4a (Herstellung einer Dispersion eines methacrylierten Polyurethanharzes)

145,4 g eines Polyesters aus Adipinsäure, Neopentylglykol und Isophthalsäure (OH-Zahl: 109 mg KOH/g) und 8,0 g Dimethylolpropionsäure werden in 69,6 g N-Methylpyrrolidon gelöst und auf 40°C erwärmt. Danach werden 55,8 g Isophorondiisocyanat so zugegeben, daß eine Reaktionstemperatur von 80°C nicht überschritten wird. Es wird solange gehalten bis ein NCO-Gehalt von 2 % (bezogen auf Festharz und bestimmt nach DIN 53185) erreicht ist. Danach werden nacheinander 3,3 g Diethanolamin, 12,2 g Dodecanol und 2,0 g Hydroxyethylmethacrylat zugegeben. Die Reaktionsmischung wird solange bei 80°C gehalten bis keine freien NCO-Gruppen mehr nachweisbar sind (Titration). Dann werden 128,0 g Methylmethacrylat zugegeben. Es werden 5,4 g Triethylamin und 5,4 g deionisiertes Wasser zugegeben und gut eingearbeitet. Nach der Zugabe von 864,0 g deionisierten Wassers erhält man eine feinteilige wäßrige Dispersion. Nun werden 250,0 g Butylacrylat, 125,0 g tert.-Butylacrylat und eine Lösung aus 62,0 g deionisierten Wassers und 2,0 g Ammoniumperoxodisulfat bei 80°C über 2 h kontinuierlich zugegeben. Anschließend wird 3 h bei 80°C gehalten und mit deionisiertem Wasser auf einen Festkörpergehalt von 30 Gew.-% eingestellt.

### Beispiel 4h (Herstellung einer Dispersion eines einen wasserunlöslichen Celluloseester enthaltenden methacrylierten Polyurethanharzes)

145,4 g eines Polyesters aus Adipinsäure, Neopentylglykol und Isophthalsäure (OH-Zahl: 109 mg KOH/g) und 8,0 g Dimethylolpropionsäure werden in 69,6 g N-Methylpyrrolidon gelöst und auf 40°C erwärmt. Danach werden 55,8 g Isophorondiisocyanat so zugegeben, daß eine Reaktionstemperatur von 80°C nicht überschritten wird. Es wird solange gehalten bis ein NCO-Gehalt von 2 % (bezogen auf Festharz und bestimmt nach DIN 53185) erreicht ist. Danach werden nacheinander 3,3 g Diethanolamin, 12,2 g Dodecanol und 2,0 g Hydroxyethylmethacrylat zugegeben. Die Reaktionsmischung wird solange bei 80°C gehalten bis keine freien NCO-Gruppen mehr nachweisbar sind (Titration). Eine Lösung von 29 g Celluloseacetobutyrat (Acetylgehalt 2 Gew.-%, Butyrylgehalt 52 Gew.-%) in 128 g Methylmethacrylat wird homogen untergemischt. Es werden 5,4 g Triethylamin und 5,4 g deionisiertes Wasser zugegeben und gut eingearbeitet. Nach der Zugabe von 864,0 g deionisierten Wassers erhält man eine feinteilige wäßrige Dispersion. Nun werden 250,0 g Butylacrylat, 125,0 g tert.-Butylacrylat und eine Lösung aus 62,0 g deionisierten Wassers und 2,0 g Ammoniumperoxodisulfat bei 80°C über 2 h kontinuierlich zugegeben. Anschließend wird 3 h bei 80°C gehalten und mit deionisiertem Wasser auf einen Festkörpergehalt von 30 Gew.-% eingestellt.

### Beispiel 5 (Herstellung einer Aluminiumanteigung)

20,5 g einer handelsüblichen Aluminiumpaste (Metallgehalt 65%) werden mit einer Mischung aus 7,0 g Butoxyethanol und 14,0 g deionisiertem Wasser gut verrührt. Danach werden 4,0 g der Bindemitteldispersion aus Beispiel 1 und 6,0 g der Bindemitteldispersion aus Beispiel 2a, 10,0 g Butoxyethanol, 34,7 g deionisiertes Wasser und 3,0 g eines handelsüblichen Polyacrylsäureverdickers (Festkörpergehalt 8 Gew.-%) zugemischt. Mit Dimethylethanolamin wird auf einen pH-Wert von 6,3 eingestellt.

### Beispiel 6 (Herstellung einer wäßrigen Schichtsilikatdispersion)

In eine vorgelegte Mischung aus 40 Teilen deionisiertem Wasser und 10 Teilen Butylglykol werden 3 Teile eines Schichtsilikats (Optigel SH der Firma Südchemie) eingestreut und unter dem Dissolver bei höchster Leistungsstufe dispergiert. Danach werden 40 Teile Melaminharz vom Hexamethoxymethylmelamin-Typ und 7 Teile deionisiertes Wasser homogen hinzugemischt.

### Beispiele 7a-f Herstellung von Wasserbasislacken

### Beispiel 7a (Vergleich)

Durch homogenes Vermischen nachstehender Bestandteile wird ein Wasserbasislack (Grünmetallic) hergestellt:
19 Teile der 40 gew.-%igen wäßrigen Polymerisatdispersion aus Beispiel 1,
17 Teile der 30 gew.-%igen wäßrigen Polyurethandispersion aus Beispiel 2a,
28 Teile deionisiertes Wasser,
8 Teile Polyacrylsäureverdicker (mit Dimethylethanolamin auf pH 7,5 eingestellt, Festkörpergehalt 8 Gew.-%),
5 Teile einer grünen Pigmentanreibung gemäß EP-B-0 581 211, Herstellungsbeispiel 10 (Pigmentgehalt 20 Gew.-% eines chlorierten Phthalocyaninpigments),
4 Teile der Aluminiumanteigung aus Beispiel 5,
3 Teile der wäßrigen Schichtsilikatdispersion aus Beispiel 6,
9 Teile Butylglykol,
0,5 Teile eines handelsüblichen Entschäumers auf Acetylendiol-Basis,
1 Teil Polypropylenglykol (Hydroxylzahl 125 mg KOH/g),
5,5 Teile deionisiertes Wasser.

200 g des Wasserbasislacks (eingestellt auf eine Anfangsviskosität von 35 Sekunden, AK4) wurden in ein 250 ml Schraubdeckelglas gefüllt und 4 Wochen verschlossen bei 40°C gelagert. Nach der Lagerung betrug die AK4-Viskosität 49 Sekunden.

100 ml des Wasserbasislacks wurden in einen 100 ml-Standzylinder eingefüllt und 1 Woche bei 20°C verschlossen gelagert. Nach einer Woche hatten sich 3 ml überstehende Flüssigkeit ausgebildet.

### Beispiel 7b (Vergleich)

Beispiel 7a wird wiederholt mit dem Unterschied, daß anstelle von 17 Teilen der Polyurethandispersion aus Beispiel 2a 17 Teile der Polyurethandispersion aus Beispiel 3a verwendet werden.

Die AK4-Viskosität stieg nach 4-wöchiger Lagerung bei 40°C von 35 Sekunden auf 45 Sekunden.

Im Standzylinder bildeten sich 3 ml überstehende Flüssigkeit.

### Beispiel 7c (erfindungsgemäß)

Beispiel 7a wird wiederholt mit dem Unterschied, daß anstelle von 17 Teilen der Polyurethandispersion aus Beispiel 2a 17 Teile der wasserunlöslichen Celluloseester enthaltenden Polyurethandispersion aus Beispiel 2b verwendet werden.

Die AK4-Viskosität stieg nach 4-wöchiger Lagerung bei 40°C von 35 Sekunden auf 42 Sekunden.

Im Standzylinder bildete sich keine überstehende Flüssigkeit.

### Beispiel 7d (erfindungsgemäß)

Beispiel 7a wird wiederholt mit dem Unterschied, daß anstelle von 17 Teilen der Polyurethandispersion aus Beispiel 2a 17 Teile der wasserunlöslichen Celluloseester enthaltenden Polyurethandispersion aus Beispiel 3b verwendet werden.

Die AK4-Viskosität stieg nach 4-wöchiger Lagerung bei 40°C von 35 Sekunden auf 42 Sekunden.

Im Standzylinder bildete sich keine überstehende Flüssigkeit.

### Beispiel 7e (Vergleich)

Durch homogenes Vermischen nachstehender Bestandteile wird ein Wasserbasislack (Grünmetallic) hergestellt:
12,3 Teile der 40 gew.-%igen wäßrigen Polymerisatdispersion aus Beispiel 1,
26 Teile der 30 gew.-%igen wäßrigen Dispersion eines methacrylierten Polyurethanharzes aus Beispiel 4a,
25,7 Teile deionisiertes Wasser,
8 Teile Polyacrylsäureverdicker (mit Dimethylethanolamin auf pH 7,5 eingestellt, Festkörpergehalt 8 Gew.-%),
5 Teile einer grünen Pigmentanreibung gemäß EP-B-0 581 211, Herstellungsbeispiel 10 (Pigmentgehalt 20 Gew.-% eines chlorierten Phthalocyaninpigments),
4 Teile der Aluminiumanteigung aus Beispiel 5,
3 Teile der wäßrigen Schichtsilikatdispersion aus Beispiel 6,
9 Teile Butylglykol,
0,5 Teile eines handelsüblichen Entschäumers auf Acetylendiol-Basis,
1 Teil Polypropylenglykol (Hydroxylzahl 125 mg KOH/g),
5,5 Teile deionisiertes Wasser.

200 g des Wasserbasislacks (eingestellt auf eine Anfangsviskosität von 35 Sekunden, AK4) wurden in ein 250 ml Schraubdeckelglas gefüllt und 4 Wochen verschlossen bei 40°C gelagert. Nach der Lagerung betrug die AK4-Viskosität 57 Sekunden.

100 ml des Wasserbasislacks wurden in einen 100 ml-Standzylinder eingefüllt und 1 Woche bei 20°C verschlossen gelagert. Nach einer Woche hatte sich 1 ml überstehende Flüssigkeit ausgebildet.

### Beispiel 7f (erfindungsgemäß)

Beispiel 7e wird wiederholt mit dem Unterschied, daß anstelle von 26 Teilen der wäßrigen Dispersion eines methacrylierten Polyurethanharzes aus Beispiel 4a 26 Teile der wäßrigen Dispersion eines einen wasserunlöslichen Celluloseester enthaltenden methacrylierten Polyurethanharzes aus Beispiel 4b verwendet werden.

Die AK4-Viskosität stieg nach 4-wöchiger Lagerung bei 40°C von 35 Sekunden auf 50 Sekunden.

Im Standzylinder bildete sich keine überstehende Flüssigkeit.

### Beispiel 8a-f (Herstellung von Basislack/Klarlack-Zweischichtlackierungen)

Die Wasserbasislacke aus Beispiel 7a-f werden jeweils auf ein übliches, phosphatiertes und durch kathodische Tauchlackierung und mit Füller vorbeschichtetes Karosserieblech durch Spritzen in einer Trockenschichtdicke von 16 µm aufgebracht. Nach 5 min. Ablüften bei 80°C wird mit einem handelsüblichen Zweikomponenten-Polyurethan-Klarlack durch Druckluftspritzen in einer Trockenschichtdicke von 40 µm überlackiert und 20 min. bei 140°C (Objekttemperatur) eingebrannt.

Die erhaltenen Zweischichtlackierungen wurden einer 2000-stündigen Kurzzeitbewitterung (VDA 621-430 (E), Weather-O-meter, Gerät: WOM-Sunshine) unterworfen. Anschließend wurde nach TNO-Standard auf Rißbildung untersucht. Bei keiner der Lackierungen wurde Rißbildung beobachtet.

Die Metalliceffektausbildung wurde unter Verwendung des von der Firma BYK-Gardner vertriebenen Meßgeräts Micrometallic^{R} durch Messung der Helligkeit L*25° (Helligkeit im L*,a*,b*-Farbraum, gemessen unter einem Winkel von 25 Grad zum Glanz) bestimmt: Lackierung 8a, 84; Lackierung 8b, 85; Lackierung 8c, 86; Lackierung 8d, 87; Lackierung 8e, 84; Lackierung 8f, 87.

## Patentansprüche

1. Verwendung einer oder mehrerer wäßriger Bindemitteldispersionen auf Basis von Polyurethanharzen, die (meth)acryliert sein können, zur Herstellung wäßriger Überzugsmittel, **dadurch gekennzeichnet, daß** die gegebenenfalls (meth)acrylierten Polyurethandispersionsteilchen 0,5 bis 5 Gew.-%, bezogen auf ihren Festkörpergehalt, eines oder mehrerer wasserunlöslicher Celluloseester enthalten.

2. Verwendung nach Anspruch 1, **dadurch gekennzeichnet, dass** die wäßrigen Bindemitteldispersionen erhältlich sind durch Vermischen von wasserunlöslichem Celluloseester mit gegebenenfalls (meth)acryliertem Polyurethanharz in Abwesenheit solcher Wassermengen, die zum Auftreten störender Nebenreaktionen führen, und anschließendes Überführen in die Wasserphase.

3. Verwendung nach Anspruch 1, **dadurch gekennzeichnet, dass** die wäßrigen Bindemitteldispersionen erhältlich sind durch Vermischen von wasserunlöslichem Celluloseester mit Polyurethanharz, anschließende (Meth)acrylierung vor der Zugabe solcher Wassermengen, die zum Auftreten störender Nebenreaktionen führen, und anschließendes Überführen in die Wasserphase.

4. Verwendung nach Anspruch 1, **dadurch gekennzeichnet, dass** die wäßrigen Bindemitteldispersionen erhältlich sind durch Vermischen von Polyurethanharz in nicht-wäßriger Phase mit wasserunlöslichem Celluloseester, Überführen in die Wasserphase und anschließendes (Meth)acrylieren in der wäßrigen Dispersion.

5. Wäßriges Überzugsmittel, enthaltend eine oder mehrere der wässrigen Bindemitteldispersionen gemäß der Definition nach einem der Ansprüche 1 bis 4.

6. Verfahren zur Herstellung eines wässrigen Überzugsmittels nach Anspruch 5, **dadurch gekennzeichnet, dass** eine oder mehrere der wässrigen Bindemitteldispersionen gemäß der Definition nach einem der Ansprüche 1 bis 4 mit Pigmenten sowie gegebenenfalls mit weiteren Bindemitteln, Vernetzern, Füllstoffen, lacküblichen Additiven und Lösemitteln vermischt werden.

7. Verfahren nach Anspruch 6, **dadurch gekennzeichnet, dass** die wäßrigen Bindemitteldispersionen durch Vermischen von wasserunlöslichem Celluloseester mit gegebenenfalls (meth)acryliertem Polyurethanharz in Abwesenheit solcher Wassermengen, die zum Auftreten störender Nebenreaktionen führen, und anschließendes Überführen in die Wasserphase hergestellt werden.

8. Verfahren nach Anspruch 6, **dadurch gekennzeichnet, dass** die wäßrigen Bindemitteldispersionen durch Vermischen von wasserunlöslichem Celluloseester mit Polyurethanharz, anschließende (Meth)acrylierung vor der Zugabe solcher Wassermengen, die zum Auftreten störender Nebenreaktionen führen, und anschließendes Überführen in die Wasserphase hergestellt werden.

9. Verfahren nach Anspruch 6, **dadurch gekennzeichnet, dass** die wäßrigen Bindemitteldispersionen durch Vermischen von Polyurethanharz in nicht-wäßriger Phase mit wasserunlöslichem Celluloseester, Überführen in die Wasserphase und anschließendes (Meth)acrylieren in der wäßrigen Dispersion hergestellt werden.

10. Verfahren zur Mehrschichtlackierung eines Substrats, durch Auftrag einer Basislackschicht und anschließend einer Klarlackschicht auf das gegebenenfalls vorbeschichtete Substrat, **dadurch gekennzeichnet, daß** man die Basislackschicht aus einem Überzugsmittel gemäß Anspruch 5 erstellt.

11. Verwendung der wäßrigen Bindemitteldispersion gemäß der Definition nach einem der Ansprüche 1 bis 4 bei der Herstellung von Mehrschichtlackierungen, insbesondere von Kraftfahrzeugen oder deren Teilen.

12. Mit einem Mehrschichtüberzug versehenes Substrat, erhalten nach dem Verfahren von Anspruch 10.

## Claims

1. Use of one or more aqueous binder dispersions based on polyurethane resins which may be (meth)acrylated, for the preparation of aqueous coating agents, **characterised in that** the optionally (meth)acrylated polyurethane dispersion particles contain from 0.5 to 5 wt.%, with reference to the solids content thereof, of one or more water-insoluble cellulose esters.

2. Use according to Claim 1, **characterised in that** the aqueous binder dispersions are obtainable by the mixing of water-insoluble cellulose ester with optionally (meth)acrylated polyurethane resin in the absence of quantities of water such as lead to the occurrence of disruptive side reactions, followed by transfer into the aqueous phase.

3. Use according to Claim 1, **characterised in that** the aqueous binder dispersions are obtainable by the mixing of water-insoluble cellulose ester with polyurethane resin, followed by (meth)acrylation before the addition of quantities of water such as lead to the occurrence of disruptive side reactions, followed by transfer into the aqueous phase.

4. Use according to Claim 1, **characterised in that** the aqueous binder dispersions are obtainable by the mixing of polyurethane resin in the non-aqueous phase with water-insoluble cellulose ester, and transfer into the aqueous phase, followed by (meth)acrylation in the aqueous dispersion.

5. Aqueous coating agent containing one or more of the aqueous binder dispersions in accordance with the definition according to one of Claims 1 to 4.

6. Process for the preparation of an aqueous coating agent according to Claim 5, **characterised in that** one or more of the aqueous binder dispersions in accordance with the definition according to one of Claims 1 to 4 is/are mixed with pigments as well as optionally with further binders, cross-linking agents, fillers, conventional coating additives and solvents.

7. Process according to Claim 6, **characterised in that** the aqueous binder dispersions are prepared by the mixing of water-insoluble cellulose ester with optionally (meth)acrylated polyurethane resin in the absence of quantities of water such as lead to the occurrence of disruptive side reactions, followed by transfer into the aqueous phase.

8. Process according to Claim 6, **characterised in that** the aqueous binder dispersions are prepared by the mixing of water-insoluble cellulose ester with polyurethane resin, followed by (meth)acrylation before the addition of quantities of water such as lead to the occurrence of disruptive side reactions, followed by transfer into the aqueous phase.

9. Process according to Claim 6, **characterised in that** the aqueous binder dispersions are prepared by the mixing of polyurethane resin in the non-aqueous phase with water-insoluble cellulose ester, and transfer into the aqueous phase, followed by (meth)acrylation in the aqueous dispersion.

10. Process for the multi-layer finishing of a substrate by the application to the optionally pre-coated substrate of a base coat layer followed by a clear coat layer, **characterised in that** the base coat layer is generated from a coating agent in accordance with Claim 5.

11. Use of the aqueous binder dispersion in accordance with the definition according to one of Claims 1 to 4 in the preparation of multi-layer finishes, in particular of motor vehicles or components thereof.

12. Substrate provided with a multi-layer coating, obtained according to the process of Claim 10.

## Revendications

1. Utilisation d'une ou de plusieurs dispersions de liants aqueuses, à base de résines de polyuréthane, qui peuvent être (méth)acrylées, pour la préparation de revêtements aqueux, **caractérisée en ce que** les particules de la dispersion de polyuréthane le cas échéant (méth)acrylées contiennent de 0,5 à 5 % en poids, par rapport à leur teneur en corps solides, d'un ou de plusieurs esters de cellulose non hydrosolubles.

2. Utilisation selon la revendication 1, **caractérisée en ce que** les dispersions de liants aqueuses sont susceptibles d'être obtenues par mélange de l'ester de cellulose non hydrosoluble avec de la résine de polyuréthane, le cas échéant (méth)acrylée, en l'absence des quantités d'eau qui conduisent à l'apparition de réactions secondaires gênantes, et introduction consécutive en phase aqueuse.

3. Utilisation selon la revendication 1, **caractérisée en ce que** les dispersions de liants aqueuses sont susceptibles d'être obtenues par mélange de l'ester de cellulose non hydrosoluble avec de la résine de polyuréthane, suivie d'une (méth)acrylation avant l'addition des quantités d'eau, qui conduisent à l'apparition de réactions secondaires gênantes, et introduction consécutive en phase aqueuse.

4. Utilisation selon la revendication 1, **caractérisée en ce que** les dispersions de liants aqueuses sont susceptibles d'être obtenues par mélange de résine de polyméthane en phase non aqueuse avec l'ester de cellulose non hydrosoluble, introduction consécutive en phase aqueuse et (méth)acrylation consécutive dans la dispersion aqueuse.

5. Revêtement aqueux, contenant une ou plusieurs dispersions de liants aqueuses selon la définition selon l'une des revendications 1 à 4.

6. Procédé de préparation d'un revêtement aqueux selon la revendication 5, **caractérisé en ce que** l'une ou plusieurs des dispersions de liants aqueuses telles que définies selon l'une des revendications 1 à 4 sont mélangées avec des pigments et le cas échéant d'autres liants, réticulants, charges, additifs et solvants usuels dans les laques.

7. Procédé selon la revendication 6, **caractérisé en ce que** les dispersions de liants aqueuses sont préparées par mélange de l'ester de cellulose nonhydrosoluble avec de la résine de polyuréthane, le cas échéant (méth)acrylée, en l'absence des quantités d'eau qui conduisent à l'apparition de réactions secondaires gênantes, et inroduction consécutive en phase aqueuse.

8. Procédé selon la revendication 6, **caractérisé en ce que** les dispersions de liants aqueuses sont préparées par mélange de l'ester de cellulose nonhydrosoluble avec de la résine de polyuréthane, suivie d'une (méth)acrylation avant l'addition des quantités d'eau, qui conduisent à l'apparition de réactions secondaires gênantes, et introduction consécutive en phase aqueuse.

9. Procédé selon la revendication 6, **caractérisé en ce que** les dispersions de liants aqueuses sont préparées par mélange de la résine de polyméthane en phase non aqueuse avec l'ester de cellulose nonhydrosoluble, introduction en phase aqueuse et (méth)acrylation consécutive dans la dispersion aqueuse.

10. Procédé pour la mise en peinture multicouches d'un substrat, par application d'une couche de laque de base et ensuite d'une couche de vernis sur le substrat le cas échéant pré-enduit, **caractérisé en ce que** l'on élabore la couche de laque de base à partir d'un revêtement selon la revendication 5.

11. Utilisation de la dispersion de liants aqueuse selon l'une des revendications 1 à 4, pour la préparation de mises en peintures multicouches, en particulier de véhicules ou de leurs pièces.

12. Substrat doté d'un revêtement multicouche, obtenu par le procédé selon la revendication 10.
